(19) Europäisches Patentamt
European Patent Office
Office européen des brevets

(11) **EP 2 165 494 B1**

(12) **EUROPEAN PATENT SPECIFICATION**

(45) Date of publication and mention
of the grant of the patent:
**24.08.2011 Bulletin 2011/34**

(51) Int Cl.:
*H04L 27/26* (2006.01)   *H04L 27/34* (2006.01)
*H04L 1/00* (2006.01)

(21) Application number: **08762253.6**

(22) Date of filing: **04.06.2008**

(86) International application number:
**PCT/GB2008/001900**

(87) International publication number:
**WO 2008/149082 (11.12.2008 Gazette 2008/50)**

(54) **APPARATUS AND METHOD FOR CODED ORTHOGONAL FREQUENCY- DIVISION MULTIPLEXING**

VORRICHTUNG UND VERFAHREN FÜR KODIERTES ORTHOGONAL-FREQUENZMULTIPLEXEN

APPAREIL ET PROCÉDÉ POUR UN MULTIPLEXAGE PAR RÉPARTITION ORTHOGONALE DE LA FRÉQUENCE AVEC CODAGE

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**RS**

(30) Priority: **04.06.2007 GB 0710664**

(43) Date of publication of application:
**24.03.2010 Bulletin 2010/12**

(73) Proprietor: **British Broadcasting Corporation London W1A 1AA (GB)**

(72) Inventor: **STOTT, Jonathan, Highton Surrey RH6 9AR (GB)**

(74) Representative: **Reeve, Nicholas Edward Reddie & Grose 16 Theobalds Road London WC1X 8PL (GB)**

(56) References cited:
**US-B1- 7 173 979**

**Description**

The invention relates to a method and apparatus for Coded Orthogonal Frequency Division Multiplexing.

Coded Orthogonal Frequency Division (COFDM) is used as the core of various broadcasting standards. In broadcasting, although a single common version of the signal is usually transmitted, environmental effects on the transmission path mean that each receiver will receive a signal that has essentially passed through a different channel. It is important therefore that broadcast systems can cope with a wide range of possible channels, with each receiver individually able to compensate for the effects of the particular channel it sees. A key advantage for broadcasting is the way in which COFDM can cope with frequency or time selective channels, that is channels which exhibit time or frequency dependent characteristics that affect the quality of transmission.

One aspect of COFDM is the use of a Forward Error Correction unit (FEC) to improve the resistance of the transmitted data to noise and other deleterious effects. The FEC adds redundant data bits to the broadcast stream so that it is more robust for transmission. However, the code rate of the FEC, that is the ratio of uncoded data bits to the coded bits transmitted cannot be too high if the system is to operate reliably. For example, suppose that the FEC code rate is 3/4, that is four coded bits are generated for every three uncoded bits of data, and a situation is experienced in which one bit in four is nulled due to problems in the transmission path. Then, at the receiver only three coded bits of data are available to the receiver's error corrector for every three original uncoded bits provided at the input of the transmitter. The overall rate, taking the erasures into account is therefore 1, and correct reception is marginally available at high-signal-to noise ratio (SNR). No higher code rate than 3/4 could be used with this channel.

However, high code rates are otherwise desirable as they can potentially allow a higher data throughput. Of course, there is a direct trade-off between capacity and performance, expressed in this case as an increase in the required SNR for decoding as the code rate is raised. With known FEC, the exclusion of high code rates because of the problems with selective channels discussed above have not been too severe. However, more powerful FEC arrangements are now practicable, such as the Low Density Parity Check (LDPC) codes, as used in the recent DVB-S2 standard, or various types of turbo code. It is desirable to exploit such FEC arrangements to give higher capacity at the same SNR by running at a higher code rate. In many cases, this will give the desired error performance in a flat Gaussian channel. However, we have realised that because of the high code rate, the acceptable proportion of erasures, caused by channel selectivity, will be less than for the FECs commonly used to date (which, because of their relative weakness, required operation at lower code rates even for flat Gaussian channels). Patent publication number US 7 173 979 describes a transmission diversity technique wherein two versions of a QPSK or DQPSK symbol are sent at different times and frequencies.

We have therefore appreciated that it would be desirable to provide a transmission scheme that is more robust to selective channels, but that preserves data capacity.

Summary of the Invention

The invention is defined in the independent claims to which reference should now be made. Advantageous features are set out in the dependent claims.

In a broad aspect the invention provides a transmission scheme with improved resilience to noise and deleterious effects in the transmission path. By transmitting two copies of the data on different symbols or carriers, if one version of the data is lost, the receiver can attempt demodulation of the surviving version. Furthermore, by using a different mapping to encode each copy of the data, signal to noise performance and data rates are equivalent to conventional Quadrature Amplitude Modulation schemes, but with an improvement in SNR when transmission conditions are poor.

Brief Description of the Drawings

A preferred embodiment of the invention will now be described by way of example and with reference to the drawings in which:

Figure 1 schematically illustrates transmitter apparatus according to a preferred embodiment;

Figure 2 illustrates an example Quadrature Amplitude Modulation (QAM) constellation used for data mapping in COFDM systems;

Figures 3a and 3b illustrates a simple mapping using a Pulse Amplitude Modulation according to the invention;

Figure 4, 5 and 6 illustrate higher order mappings;

Figure 7 is a table setting out example schemes for mapping data to u1 and u2 in a 16 point constellation;

Figure 8 is an illustration showing the result of the mapping of Figure 7 for the first few terms;

Figure 9 is a graphical illustration of the bit mapping expressed in Figure 7 for all terms;

Figure 10 is a table setting out example schemes for mapping data to u1 and u2 in a 64 point constellation;

Figure 11 is a graphical illustration of the bit mapping expressed in Figure 10;

Figure 12 is a graphical illustration of a higher order bit mapping than that expressed in Figure 10; and

Figure 13 schematically illustrates receiver apparatus according to a preferred embodiment.

Detailed Description of the Preferred Embodiments

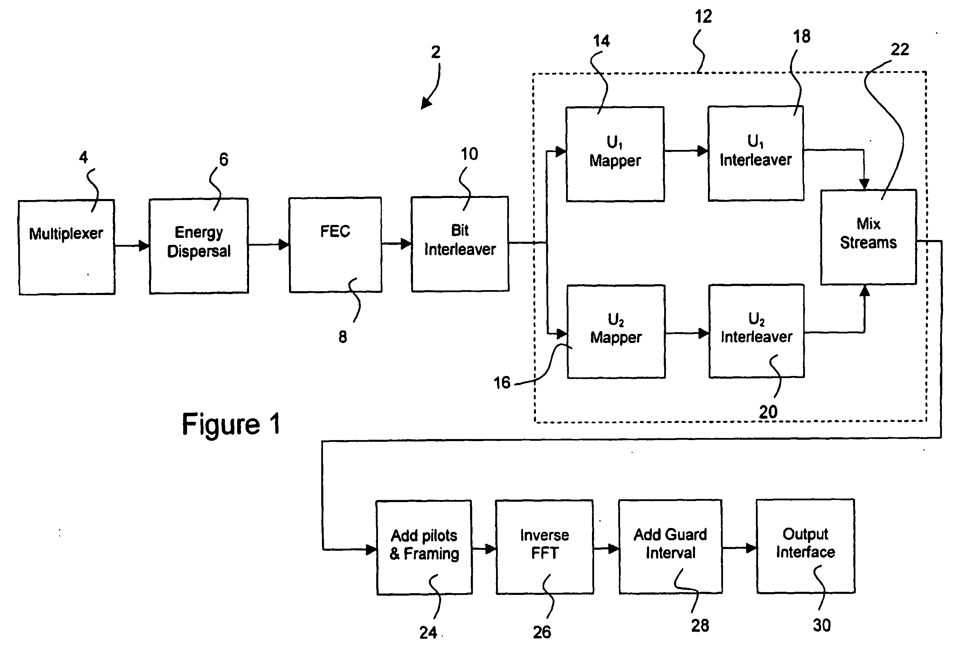

A preferred embodiment of the invention will now be described by way of example. Figure 1 is an illustration of a COFDM transmitter 2 according to the invention. First, multiplexer 4 receives data streams from a plurality of different data sources and combines these into a single stream for transmission. The data stream output from the multiplexer is then passed to a scrambler 6, which transforms the incoming data stream into a pseudo-randomised form, using a pseudo random number generator or transfer function for example. This serves to give a more even energy dispersal across the energy spectrum, as the spectrum of the signal is no longer solely dependent on the data, and long series of zeros or ones that appear in the data can be broken up.

The data is then passed to the Forward Error Correction (FEC) unit 8, where redundant data bits are added to the data so that the transmitted form of the data is more robust to errors and nulls. The bit interleaver 10 subsequently receives the data stream from the FEC 8, and reorders the bits within the data stream so that the effects of any time dependent errors within the transmission path are dispersed among the transmitted data.

The operation of elements 4 to 10 will be understood to be identical to those of known COFDM systems. However, the operation of the subsequent mapping/interleaving section 12 that maps the bits received from the bit interleaver onto the carrier signals differs, and will be explained in detail next.

The preferred embodiment of the invention uses repeated Pulse Amplitude Modulation (PAM) in order to represent the incoming data bits on the carrier signal. It is repeated in the sense that the data is transmitted via the PAM scheme twice, each time on a different carrier signal and symbol, and using a different mapping. This has been found to give data rates that equal corresponding Quadrature Amplitude Modulation (QAM) based systems, but with a concomitant improvement in signal to noise ratio (SNR).

In COFDM, each carrier signal of a particular frequency $f$ is in fact two sinusoidal carrier waves, $\pi/2$ out of phase with each other. The amplitude of each wave is modulated in order to carry the data. Thus, a transmitted COFDM signal will be of the form:

$$S = I \cos 2\pi ft + Q \sin 2\pi ft$$

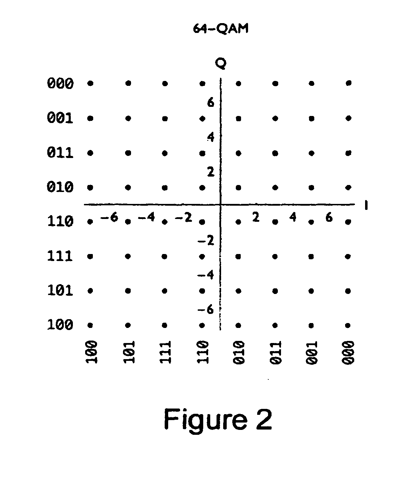

Where I and Q represent the time varying amplitude of the individual carrier waves and the data. In the receiver, the received signal is operated upon using appropriate mathematical functions to separately extract I(t) or Q(t). Many applications of COFDM use QAM to determine what values I(t) and Q(t) the carrier waves should take. This is akin to multiplying a time division of the carrier signal, known as a symbol, by one complex number $z = x + j y$. Each of x and y are constrained to take one of $2^m$ different values depending on how many data bits m are to be carried on the symbol. Thus, if each of the I(t) and Q(t) are to represent 3 bits of data each, eight different amplitude values are required for each carrier, and 64 different states exist for the symbol. This is known as 64-QAM. If these states are plotted on an Argand diagram, such as is illustrated in Figure 2, we obtain a constellation having the same number of spots. The two axes, and the components I and Q, are referred to as In-Phase and Quadrature respectively, to reflect the fact that they are carried on carrier waves that are $\pi/2$ out of phase with each other.

Having determined how many states are available in each symbol, the next question is how to use the constellation to represent the data. This is a question of how to map the incoming data bits to points in the constellation. For example, if the data bits 000 000 are received should these be mapped to the point in the bottom left hand corner, or to somewhere else. The bits can be mapped to positions in many ways, but so called Gray mapping is often preferred. Gray mapping has the property that when moving from a constellation point to a point that is adjacent, it is only necessary to change one bit to convert the bit representation of the first point to that of the second. For example, in Gray mapping, the states 011 and 100 which represent the numbers 3 and 4 in conventional binary notation, are not adjacent as, changing one bit at a time, three steps are required to move from the first bit notation to the second (011, 010, 110, 100).

In Figure 2, the Gray mapping notation is shown along the axis. In the Gray mapping shown for example, the I and Q values that correspond to the bit sequence (001, 011) are (5, 3) for example. Gray mapping is preferred in COFDM as it provides some resilience to errors that may occur during transmission.

In the preferred embodiment, the mapping of data to the carrier signal, and the use of the carrier waves are themselves modified from a typical COFDM system such as that described above.

As noted above, each symbol in a COFDM broadcast transmits a complex number $z = x + j\,y$ made up from the two real numbers x and y, which represent the In phase and Quadrature components I(t) and Q(t). During transmission however, it is possible that the symbol is erased or nearly erased by the effects of a selective channel, and is therefore not received by the receiver in a form that can be decoded. If this happens, any information represented by the complex number will be lost. Known systems try and avoid such eventualities by transmitting the same complex number twice, either on a carrier signal having a different, non-adjacent frequency, or in a different, non-adjacent symbol on the same or on a different carrier signal. Thus, the transmission of the data is repeated.

In the present invention, the transmission of the data is also repeated, but the repetition occurs during the mapping stage of the encoding process, rather than solely during the transmission phase. In short, the data to be transmitted is first mapped to one of the In-phase or Quadrature components in a symbol, and the other component used to represent other unrelated data. The data is then re-mapped using a different mapping scheme to the In-phase or Quadrature component of a different symbol.

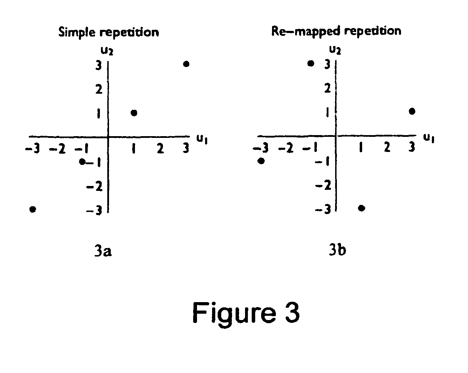

A simple example is illustrated in the pseudo-constellation diagram of Figure 3. In this example, the axes represent two potentially different mappings of the same data. For this reason, the axes are labelled u1 and u2, rather than x and y, emphasising the fact that they are not two components of a complex number but are essentially different versions of the same thing. We suppose that 2 bits of data are mapped onto the single axis quantity u1, which as known in the art then takes one of the four different values [-3, -1, 1, or 3]. This numbering is conventional to ensure four different equally spaced integer values or levels centred on the origin.

This is an example of 4-PAM as 4 states are available for encoding. For the purposes of this discussion it is not yet necessary to consider how the two bits are mapped to the four states, so we can by way of example imagine a simple scheme in which 00 is assigned to a value of 3, 10 to 1, 01 to -1, and 11 to -3. The quantity u1 is then assigned to one of the In-Phase or Quadrature components of a symbol for transmission.

Separately, we then consider the quantity u2, which will be transmitted on the In-phase or Quadrature component of a different carrier, either in the same or preferably a different symbol.

Assuming that the mapping of data to the second quantity u2 is identical to the mapping for u1, then the pseudo-constellation diagram of u1-u2 is that shown in 3a), namely four points stretched along a diagonal line. This is equivalent to a rotated and stretched version of 4-PAM as the spacing between the points lying on the diagonal is now increased by a factor of $\sqrt{2}$ compared with the spacing between the points on either axis. Although, the diagram is referred to as a constellation diagram, it is important to remember it is not a constellation diagram in the conventional sense. Thus, in our simplified mapping scheme outlined above, if the input data bits are 00, then the diagram illustrates the fact that this data will be mapped to a value of 3 in carriers u1 and u2 and sent on different symbols.

However, now consider what happens if the copy u2 is generated with a different mapping, so that the numbers [-3,-1,1 and 3] in u1 correspond to the numbers taken from the corresponding positions in the list [-1,3,-3,1]. Put another way, the simple mapping scheme for u2 now requires that a value of 00 is mapped to 1, 10 to -3, 01 is mapped to 3, and, 11 is mapped to -1.

The mapping can be expressed as follows:

| Relationship of u1 and u2 | | Bit Mapping | |
|---|---|---|---|
| u1 | u2 | Bit 0 | Bit 1 |
| -3 | -1 | 1 | 1 |
| -1 | 3 | 0 | 1 |
| 1 | 3 | 1 | 0 |
| 3 | 1 | 0 | 0 |

Figure 3b) showing u2 versus u1 now opens out to show the points having an even greater spacing by a factor of $\sqrt{5}$ compared to $\sqrt{2}$. Instead of looking like a rotated 4-PAM constellation, the diagram now looks like a rotated 4-QAM or Quadrature Phase Shift Keying (QPSK) constellation.

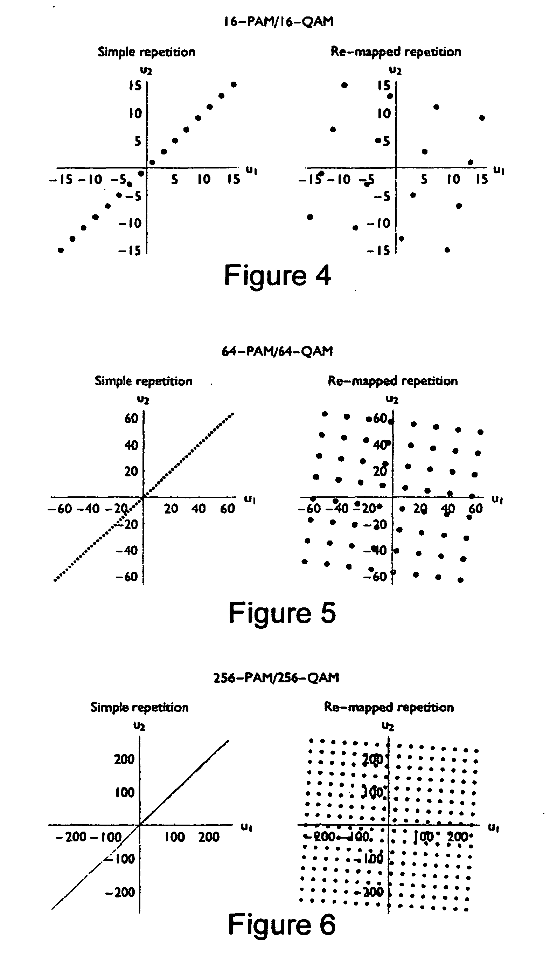

As noted above, figures 3a and 3b are not conventional constellation views, which would show the x and y components of a single complex number that has been transmitted in one symbol. Instead, we are taking a view of two real quantities that will travel in different symbols and so be subject to quite separate frequency or time dependent errors, and generally arrive at a receiver with different Signal to Noise ratios. Additionally, whereas the noise in a QAM scheme may be viewed as a ball shaped region of uncertainty around a point, the opening out and stretching of the data representation in the figure 4, means that the ball is also stretched out horizontally or vertically depending on the ratio of the two SNRs of u1 and u2.

If we consider equal SNR, and hence isotropic noise on the diagram, it will be clear that the greater spacing between points for the case of re-mapped repetition will give better performance than the case of simple repetition of 4-PAM given the same mapping.

In general, provided both u1 and u2 are received with similar SNRs, the signal to noise performance of the repeated 4-PAM transmission scheme using different mappings will be that of 4-QAM, and considerably enhanced compared with 4-PAM alone. Additionally, the system offers an improvement over 4-QAM as if one or the other is erased completely, then demodulation of the survivor in a single 4-PAM scheme remains possible.

Furthermore, it is important to note that the improvement in noise resilience does not come at the expense of data capacity. For example, in the simple scheme described above, the data capacity of one symbol in the 4-QAM scheme is two bits, each bit being represented on one axis and corresponding to the In-Phase or Quadrature component of the symbol. In the proposed scheme, each of the In-Phase and Quadrature carrier waves carry two bits, (from different data sources), but the data is replicated in another symbol. Thus, each symbol carries 4 bits of data, but as there is duplication, the data capacity is the two bits per symbol of 4-QAM.

The discussion so far has focussed on two-bit mappings in order that the underlying concept can be easily grasped. The principle is however intended to be used with higher order modulation. In each case, $2^m$-PAM is used to transmit two copies of m-bit encodings, with related but distinct mappings, so that viewed together in two dimensions they are equivalent to a rotated $2^m$ QAM constellation. Figure 4 illustrates the next three members of the family.

Suppose we pick the example labelled 16-PAM/16-QAM in Figure 4. It shows that given a suitable mapping, a u1 versus u2 diagram is generated that in appearance is like a rotated 16 QAM constellation. U1 and u2 are nevertheless transmitted separately in different COFDM cells as 16-PAM. Furthermore, those cells still convey complex numbers, so each cell actually conveys two independent, unrelated 16-PAM numbers. It follows that if the complex numbers actually transmitted in the COFDM cells were viewed on an Argand diagram, they would have the appearance of a 16 by 16 = 256 constellation. However, in the preferred system demodulation is always performed by considering the u1, u2 combination. It should be clear that in this case, despite the apparent transmission of a 256 constellation, the performance in a flat Gaussian channel (where u1 and u2 will have the same SNR) will be identical to that of a conventional (no repetition) 16-QAM COFDM system. It will also have the same capacity, namely four coded bits per COFDM cell containing data.

The same is true of the 64-PAM mappings shown in Figure 5, which has the appearance of a 2056 constellation, and the 256-PAM mapping shown in Figure 6, having the appearance of a 65536 constellation.

Figures 4, 5 and 6 show the remapping of the constellations. It can be shown that the angle of rotation a is given by the expression

$$\alpha = \text{ArcTan } 1 / 2^m$$

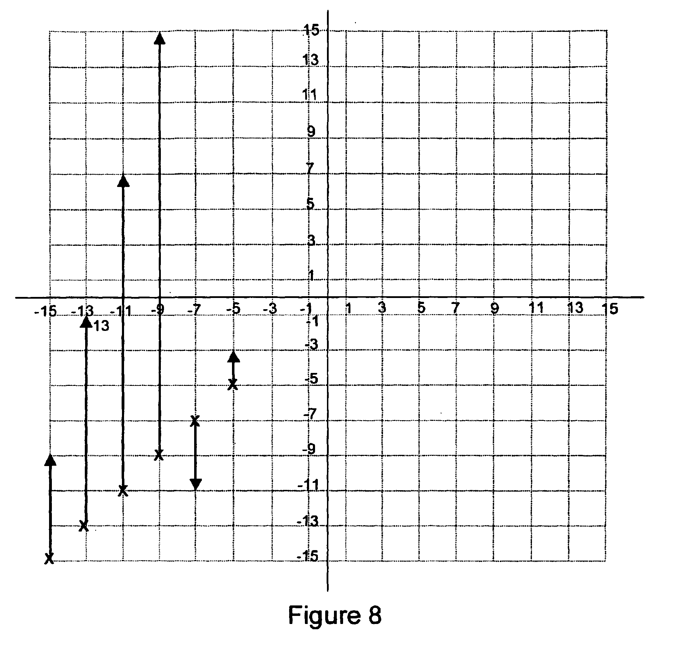

This can be appreciated from Figure 8 for example, to which reference should briefly be made, showing the effect of the re-mapping in the 16-QAM/16-PAM case. In this case if we move from one remapped constellation point to the next (the remapped points are located at the head of the arrows), we travel along the u1 axis by 2 points, and along the u2 axis by 8 points. In this case the clockwise rotation is given by

$$\alpha = \text{ArcTan } 1 / 4$$
$$= \text{ArcTan } 1 / 2^2$$

The rotation therefore gets smaller as the QAM order increases. For 64-QAM the angle is $\alpha = \text{ArcTan } 1/8$, and for 256-QAM the angle is $\alpha = \text{ArcTan } 1/16$. Although $\alpha$ is the angle required in order to ensure that the projections u1 and u2 constitute uniform PAM, other rotation angles, which do not generate uniform PAM projections, could be used, and may be advantageous where there is selective fading without erasures giving better results. The angle may of course be clockwise or anticlockwise providing the transmitter and receive operate in agreement with one another.

The scaling of the constellation, can be determined from considering the bottom right-hand corner of the 16-QAM constellation. Referring to Figure 2, it can be seen that for a 16 QAM constellation the bottom right hand point is at {+3,-3}, and referring to Figure 4, after rotation it is at {+9,-15}. Its linear dimensions have therefore been scaled by a factor of $\sqrt{17}$. Generally it can be shown that that scaling factor is $\sqrt{(1+4^m)}$.

The mapping of data bits to the u1-u2 constellations is key. In the 4-PAM discussion, bits were mapped in any convenient way to provide u1, and u2 was then derived from u1 so that when viewed together u1 versus u2 appears to be in the form of a rotated 4-QAM constellation. The mappings for the 16, 64 and 256-PAM versions is not so straightforward. Furthermore, in practice, there are a number of ways the bits can be mapped.

Assuming that the performance of the system is to be optimised for the Gaussian flat channel, the best results are obtained by choosing the mapping such that the rotated $2^m$-QAM like constellation follows Gray mapping. The mapping of bits to u1 and u2 is therefore chosen so as to bring this about. This means that the mapping of bits to u1 and u2 cannot itself generally follow the Gray rules, so that for severely faded cell pairs (where one of u1 or u2 is erased), the surviving u will not in general be so mapped as to get the best from it in isolation. Figure 5 shows suggested bit mappings of data to u1 and u2, which have been chosen to ensure Gray-like mappings to the two dimensional constellation of u1 and u2.

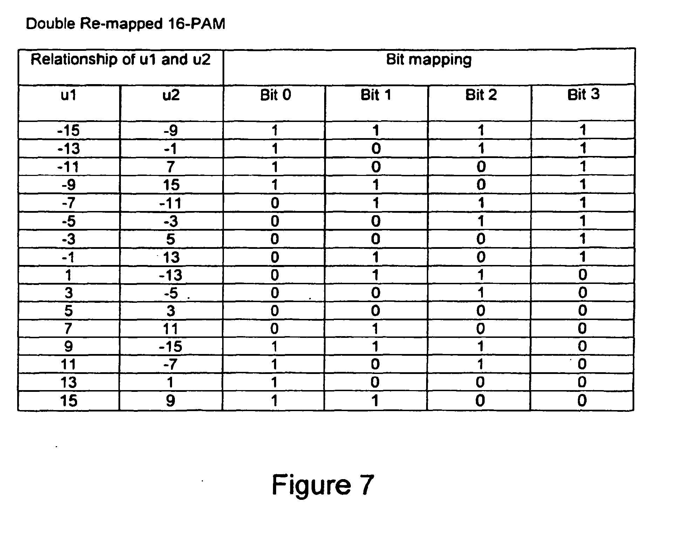

As noted above, the assignment of values to u2 is derived from u1. As shown in Figure 7, for example, the mapping of u1 and u2 is achieved by taking the u1 values in order from -15 to 15, and for each step along the number line of u1, stepping four values along the same number line for u2. In this case, the number line runs -15, -13, -11, up to 15 by increments of two. If the end of the number line is reached in u2, one wraps around to the beginning. Thus, a u1 value of -15 is paired with the fourth value in the number line or -9, the next u1 value of -13 is paired with the eighth of -1, the third value of -11 with the twelfth value of 7. As illustrated in Figure 8, this has the effect of shifting the u1, u2 mappings which would otherwise be on a straight-line, away from each other, as well as giving them the appearance of a rotated QAM constellation.

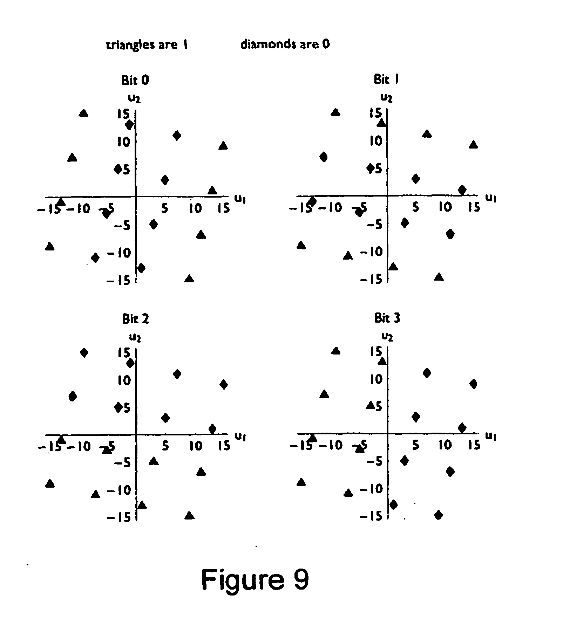

Figure 8 illustrates graphically how u2 is derived from u1. Working from the bottom left of the diagram along each value of u1, the x notation shows the diagonal line in on which the u1/u2 points would be located in u1-u2 space if the mapping of u1 and u2 were identical. The arrows indicate the transformation of the u2 co-ordinates such that the u1 and u2 points are arranged in a manner that resembles a rotated QAM constellation. In the example shown, it can be seen that the points on the diagonal are essentially mapped first along the left hand edge of the rotated vertical line defining part of a grid. Once the vertical line has been filled with points, the next sequence of points are mapped along the next rotated vertical line of the grid. The full pseudo-constellation is shown in Figure 9. The triangles represent a value of 1 and the diamonds a value of 0. The values have been chosen to best suit Gaussian performance.

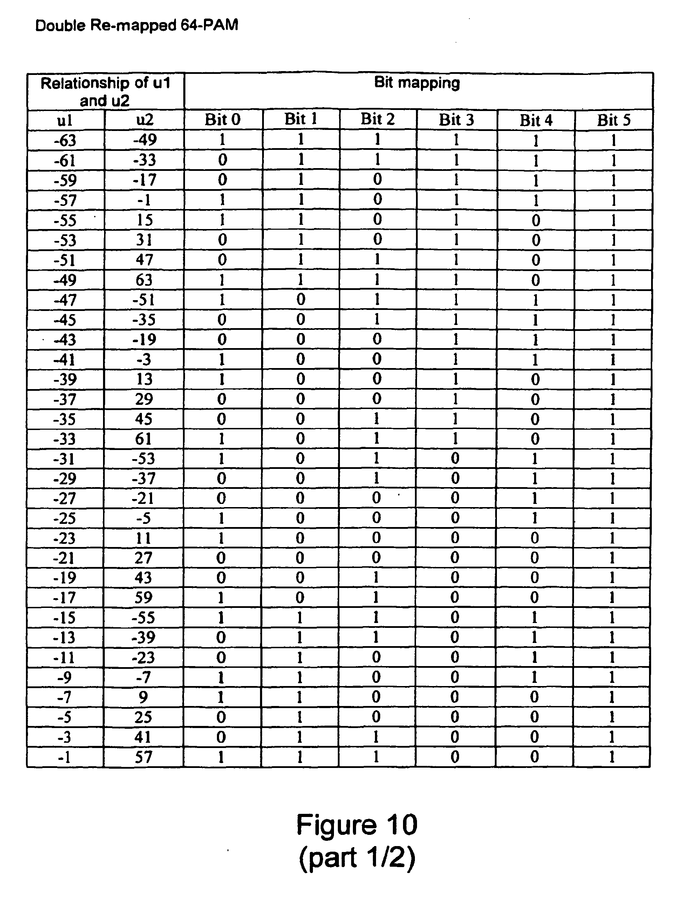

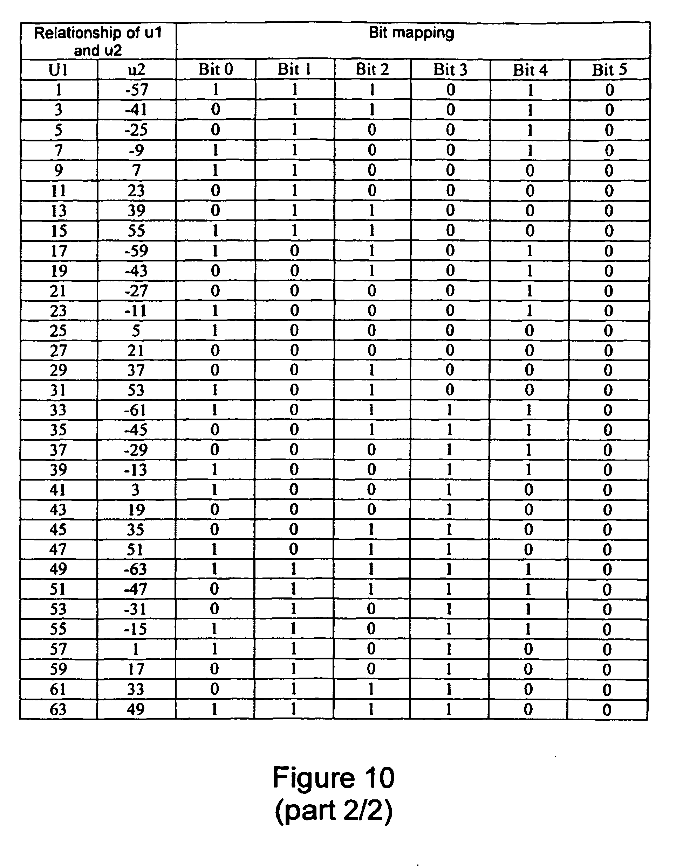

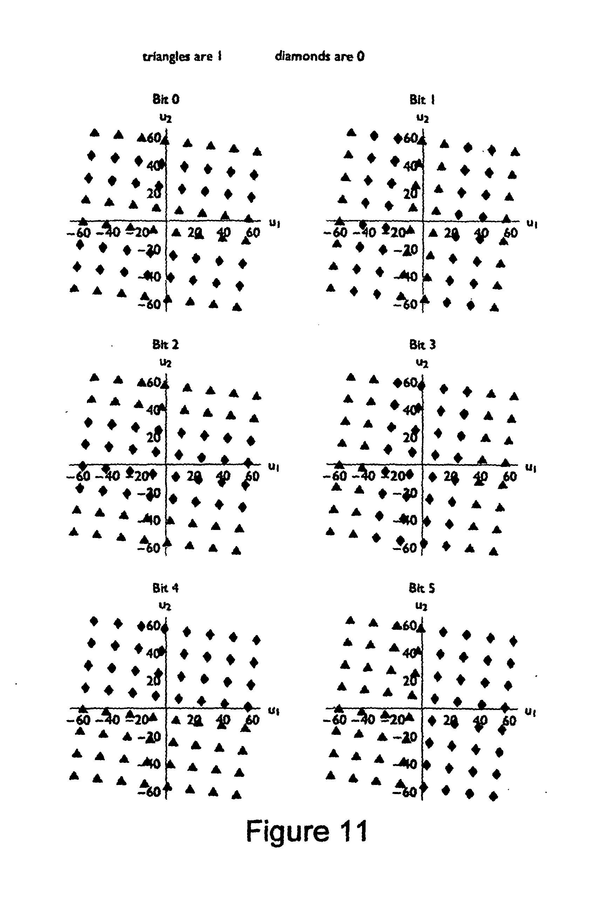

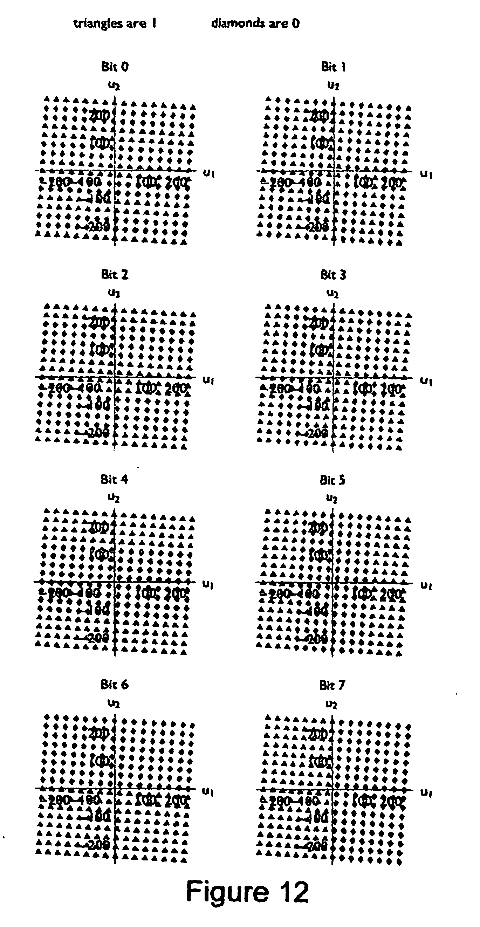

The table of Figure 10 shows the mapping for a 64-PAM system, and Figure 11 the corresponding pseudo-constellations for the bits. Figure 12 shows the pseudo-constellation for a 256-PAM system.

Figure 10 illustrates the mapping schematically by way of a look-up table. However, the mapping can be implemented using matrices as it means the data can be mapped onto the Gray mapped QAM as x, y, and then converted to the rotated and scaled u1 and u2 co-ordinates by a simple matrix multiplication.

The original unrotated QAM has points (x, y) each in the range from $-(2^m-1)$ to $(2^m-1)$. The bottom right corner point is therefore $\{(2^m-1), -(2^m-1)\}$. After rotation and scaling, it has the (u1, u2) co-ordinates $\{(2^{2m}-1) - 2(2^m-1), -(2^{2m}-1)\}$. Generally, a combined rotation and scaling operation must take the form

$$\begin{bmatrix} u1 \\ u2 \end{bmatrix} = \begin{bmatrix} a & b \\ -b & a \end{bmatrix}\begin{bmatrix} x \\ y \end{bmatrix}$$

Substituting, the two versions of the co-ordinates for the bottom right corner point, we can solve for a and b, leading to the general result:

$$\begin{bmatrix} u1 \\ u2 \end{bmatrix} = \begin{bmatrix} 2^m & 1 \\ -1 & 2^m \end{bmatrix}\begin{bmatrix} x \\ y \end{bmatrix}$$

As shown in Figure 1, the u1 mapper block 14 and u2 mapper block 16 each receive a copy of the signal from the bit interleaver 10. Each mapper determines what PAM state in u1 or u2 is required to represent the sequence of bits received from the interleaver 10 according to the mappings described above. The output of each of the mappers will then be respective sequences of either u1 or u2 mappings, given the signal received from the bit interleaver.

The u1 interleaver 18 and u2 interleaver 20 ensure that the two versions of the signal are then dispersed among the different available carriers signals. This is done so that the two versions of the signal are unlikely to be subject to the same frequency or time selective disturbances during transmission.

In the simple example shown, the available carrier frequencies are divided into two sets: one set is used to carry u1 mappings and the other is used to carry u2 mappings. Thus the interleaver 18 is arranged to take two successive u1 mappings and assign these to a carrier of a first frequency, two further u1 mappings and assign these to a second carrier frequency and so on. The same process occurs for the u2 numbers in the interleaver 20. Two u1 or u2 numbers are required for each carrier, as each number will eventually be carried by one of the in-phase or quadrature components of the signal on that carrier.

In this sense, the interleavers 18 and 20 will be understood to be frequency domain interleavers. Time domain interleavers could also be provided with the provision of suitable memory and delay blocks. Furthermore, it is not necessary to have u1 numbers limited to particular carriers and u2 numbers limited to other carriers, and it is conceivable that the u1 and u2 numbers would be arranged freely in both time and frequency and sent as one of a pair of in-phase and quadrature components with another u1 or u2 number. Any combination is possible providing the u1 and u2 numbers representing the same information are not sent in the same signal time and frequency division or cell.

To accommodate this complexity, the transmitter includes a mix streams block 22 that takes the u1 and u2 interleaved carrier signals and combines them such that the output is data bits assigned to a plurality of in-phase and quadrature carrier waves in which each cell has two u1 or u2 numbers or a combination of both representing different data. Further, separate u1 and u2 interleavers (and de-interleavers in the receiver) are shown in order to emphasise the need to ensure independence of fading. However, in practice this can be achieved by an appropriately designed single interleaver.

The u1 and u2 mappers and interleavers 14, 16, 18 and 20, and the mix streams block 22 can be understood as forming a mapping unit 12, that performs a similar role to the constellation mapper in a QAM system.

The signal output from the mix streams block 22 is passed to block 24 which effects Pilot signals and framing. The output is passed to Inverse FFT block 26, which takes the multitude of parallel complex carrier-amplitude values and generates the corresponding plurality of carriers as a single time domain signal. Guard Intervals are then added by block 28 and the signal is passed to output interface 30 for Digital to Analogue Conversion and transmission via an antenna.

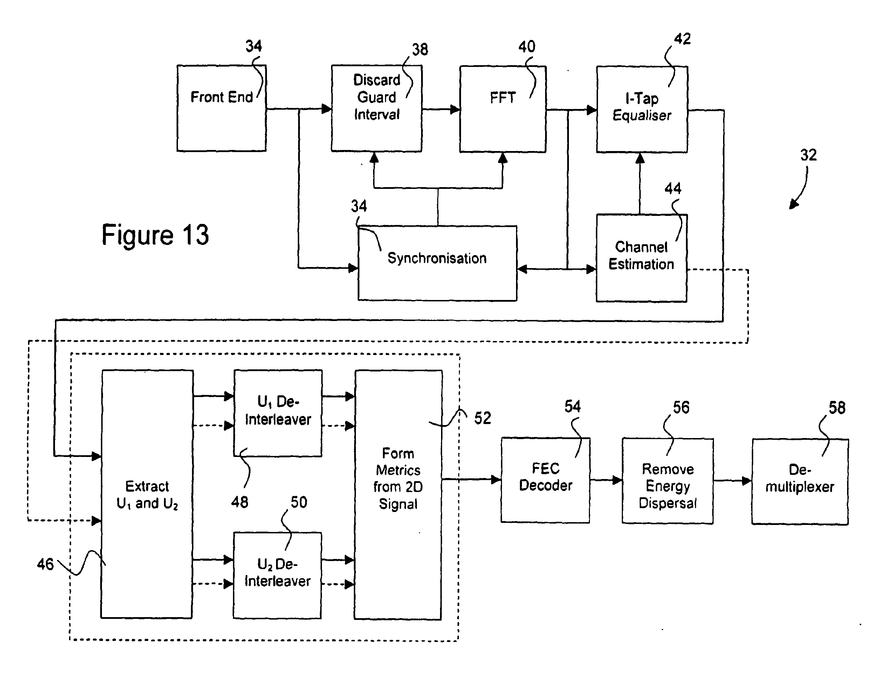

Figure 13 illustrates an example of a receiver according to the invention. The signal is first received at Front End 34, where it is amplified and filtered. It is subsequently mixed down to the base band frequency and the in-phase and quadrature components of the signal are separated. The Front End also includes an Analogue to Digital converter (not shown) for converting the signal into a digital signal.

The digital signal output from the Front End is then passed to Synchronisation Unit 36, where the timing and frequency synchronisation information is extracted from the received signal. In general the process of synchronisation requires examination of the signal in both time and frequency domains, and various appropriate algorithms are known in the art. The time synchronisation information is extracted using such algorithms and passed to the Discard Guard Interval block 38 for the removal of the Guard Intervals, and to the FFT block 40. The Discard Guard Interval block 38 selects portions of the time domain signal according to the synchronisation timing that are equal in length to the active part of the symbol thereby effectively discarding the guard interval. The length in time of the useful active symbol is equal to the reciprocal of the carrier spacing.

The signal minus the guard intervals is passed to the FFT block from the Discard Guard Interval block 38 where it is converted into the frequency domain. The frequency domain signal is passed to 1-Tap equaliser block 42, Channel Estimator 44 and also to Synchronisation Unit 36.

The frequency domain signal after the FFT includes both reference information and the payload data. From the reference information, the Channel Estimator infers the channel frequency response (and the channel impulse response if desired) and passed this to 1-tap equaliser block 42, which by simple division is then able to reproduce the received cells that carry data with the correct amplitude and phase, despite any frequency selectivity encountered in the transmission channel.

It will be appreciated that a conventional COFDM receiver would then form decision metrics from the equalised data cells, weight them according to the corresponding channel state information produced by the channel estimator block and de-interleave the metric information before passing it to a FEC decoder.

However, the receiver shown in Figure 13 operates in a different way to ensure that the u1 and u2 components are properly handled. The arrangement shown in the Figure has reversed the order of the interleaving and metric blocks, since the metrics cannot be deduced properly until the corresponding u1 and u2 values are brought together.

The equalised information from the equaliser block 42, together with the corresponding channel state information (CSI) is sorted into two sets by separator 46. One set contains the information that was mapped as u1, and the other contains that which was mapped as u2. These are de-interleaved separately by respective de-interleavers 48 and 50 so that corresponding u1 and u2 information is finally presented at the respective de-interleavers output.

The conceptual pseudo-constellations shown in Figures 9, 11 and 12 above could in principle be observed at this point. By taking the u1 and u2 information, together with the CSI for both, the Form Metrics block 52 is able to form decision metrics to pass to the FEC decoder, one for each bit transmitted.

The formation of the decision metric follows the same reasoning as applies for conventional QAM systems, except that in this case it must be generalised so that the metric is a function of four things: the received values of u1 and u2 plus their respective estimated signal-to-noise ratios. The necessary relationship is simple to derive mathematically, but is difficult to present explicitly as it has a large number of terms. It consists of the log of the ratio of two likelihoods, one for the case of 0 being transmitted, and the other for the case of a 1 being transmitted. The likelihood (for the case of say 0 being transmitted) takes the form of the 2-D probability distribution function (PDF) describing the signal received for the case that a 0 was transmitted, and having regard to the known signal-to-noise ratios for u1 and u2. This probability distribution is in turn the mean of all the individual 2-D PDFs that apply for each of the possible individual constellation states that could have been transmitted, given that this particular bit was a 0, i.e. all the diamond points in Figures 9, 11 and 12.

A practical receiver may well apply several simplifying approximations to this relationship, as is indeed already the case in conventional receivers.

An example process for metric calculation is however explained here. This assumes for simplicity that the constellations are restored to standard size (and angle) before metrics are computed. However, the approach is believed to give the same results compared with alternative approaches in which the equalisation is not explicitly performed before metric calculation.

We assume that the PAM conveys m bit/symbol, i.e. that it is $2^m$-PAM, whose constellation comprises $2^m$ points arranged along a line (a single axis, u1). For each of the m bits, according to the mapping scheme chosen, $2^{m-1}$ points are mapped as the value '1' for that bit, and the remaining $2^{m-1}$ bits are mapped as the value '0'. The points are labelled with an index i, such that the points mapped as a '1', for a bit M, will have index values $i \in C_{M,1}$ and those mapped as '0' will have index values $i \in C_{M,0}$. Clearly, $C_{M,1} \cup C_{M,0}$ comprises all of the $2^m$ points.

$u_{1,I}$ denotes the position on the axis u1 at which the transmitted $i^{th}$ point is located, and $U_1$ as the position on the axis at which a received constellation point (after equalisation) appears. The soft decision metric for bit M is then

$$\text{metric for bit M} = \log\left(\frac{\sum_{i \in C_{M,1}}\left(e^{\frac{-(U_1 - u_{1,i})^2}{2\sigma^2}}\right)}{\sum_{i \in C_{M,0}}\left(e^{\frac{-(U_1 - u_{1,i})^2}{2\sigma^2}}\right)}\right)$$

where $\sigma^2 = \dfrac{1}{\gamma 2^m}\sum_i u_{1,i}^2$ and $\gamma$ is the linear signal-to-noise power ratio.

Thus, we have a Gray mapped rotated QAM symbol as the starting point. With m bit/axis, it conveys 2 m bit/constellation, and the constellation has $2^{2m}$ states. The QAM is thus $2^{2m}$-QAM. It also projects onto the two u1 and u2 axes as $2^{2m}$-PAM (uniform PAM in the case of re-mapped repetition, or non-unifrom PAM for more general rotation cases). Corresponding values of u1, u2 are separated in transmission, but after equalisation and deinterleaving are reunited in the receiver for the purposes of metric calculation. The metric now depends on these received values $U_1$ and $U_2$. and on their respective signal-to-noise ratios, $\gamma_1$ and $\gamma_2$. These signal to noise rations are different, in general, since they have travelled in different OFDM cells, and been subjected to different fading, whose amount is known because the channel has been measured, e.g. by scattered pilots.

The metric for the bit M is now calculated as:

$$\text{metric for bit M} = \log\left(\frac{\sum_{i\in C_{M,1}}\left(e^{\frac{-(U_1-u_{1,i})^2}{2\sigma_1^2}-\frac{(U_2-u_{2,i})^2}{2\sigma_2^2}}\right)}{\sum_{i\in C_{M,0}}\left(e^{\frac{-(U_1-u_{1,i})^2}{2\sigma_1^2}-\frac{(U_2-u_{2,i})}{2\sigma_2^2}}\right)}\right)$$

where $\sigma_1^{\,2} = \dfrac{1}{2\gamma_1}\dfrac{1}{2^m}\sum_i(u_{1,i}^2 + u_{2,i}^2)$ and $\sigma_2^{\,2} = \dfrac{1}{2\gamma_2}\dfrac{1}{2^m}\sum_i(u_{1,i}^2 + u_{2,i}^2)$.

This gives the metric for the calculation in the ideal case.

Once the decision metrics have been formed the remainder of the receiver can be implemented in a conventional way. The FEC decoder 54 exploits the FEC code redundancy and the metric information to produce corrected data which should be the same as transmitted-data bits with adequately high probability. If energy dispersal scrambling was applied at the transmitter it is removed by despreader 56, and if multiple services were multiplexed together they are demultiplexed by demultiplexer 58 so that data corresponding to the desired service(s) can be extracted.

Despite its use of repetition, the system does not reduce the capacity of the system, in the sense that on the flat Gaussian channel it delivers exactly the same capacity as a conventional, non-repetition system having the same SNR performance. The trade-off occurs by squeezing more data points into the mapping that is used. Although, having constellation data points that are closer together usually means that susceptibility to noise in increased, this is avoided by using different mappings in different symbols and spreading the copy of the data out in time and/or frequency.

The proposed apparatus and method for repeat encoding of data can be applied to any COFDM based broadcasting standards, such as Digital Audio Broadcasting (DAB), Digital Video Broadcasting (DVB) including Digital Video Broadcasting-Terrestrial (DVB-T) and Digital Video Broadcasting-S2 Standard, and Digital Radio Mondiale (DRM) for example.

It will be appreciated that the system described could be implemented in software or hardware, or a combination of both.

## Claims

1. A transmitter for transmitting a multicarrier signal, the transmitter comprising:

   a plurality of separate carrier signal paths for frequency domain carrier signals having in-phase and quadrature components subdivided in the time domain into symbols, each carrier having a different respective frequency;
   a frequency-to-time domain converter for converting the plurality of frequency domain carrier signals into a single time domain multicarrier signal:
   a mapper unit arranged to receive a stream of data bits representing source data, and encode these onto the one or more carriers; wherein the mapper unit comprises;
   a first mapper arranged to take a predetermined number of bits of data and determine what carrier signal modulation is required to represent those bits according to a first pulse amplitude modulation (PAM) scheme;
   a second mapper arranged to receive the same data bits as the first and determine what carrier signal modulation is required to represent those bits according to a second pulse amplitude modulation (PAM) scheme;
   an interleaver arranged to encode the data once according to the first PAM scheme and once according to the second PAM scheme, as determined by the first and second mappers, onto separate in-phase and/or quadrature components of symbols in the plurality of carrier signals, such that the first and second encodings of data do not appear in the same carrier and symbol.

2. The transmitter of claim 1, wherein the interleaver is arranged such that the first and second encodings of data appear on different carrier signals to one another.

3. The transmitter of claim 1, wherein the interleaver comprises first and second interleavers arranged to respectively encode the data according to the first PAM scheme and according to the second PAM scheme, wherein the first interleaver encodes data according to the first mapping onto a first set of carrier signals, and the second interleaver encodes data according to the second mapping onto a second set of carrier signals, and wherein the first and second sets are mutually exclusive.

4. The transmitter of claim 1, wherein the interleaver is arranged such that the first and second encodings of data appear in different symbols to one another.

5. The transmitter of any preceding claim, wherein the second pulse amplitude modulation (PAM) scheme is a modified version of the first.

6. The transmitter of claim 5, wherein the second pulse amplitude modulation scheme is a modified version of the first, such that if the mappings of data for each PAM scheme were plotted in two-dimensions, the result is a grid resembling a rotated QAM constellation.

7. The transmitter of claim 6, wherein the mapping is chosen such that the rotated QAM like constellation follows Gray mapping.

8. A receiver for decoding a multicarrier signal transmitted by the transmitter of any preceding claim, comprising:

   a front end for receiving the transmitted data;
   Synchronisation and estimation circuits for detecting and outputting symbols in the time domain signal;
   an extractor for extracting from the symbol data encoded by the first PAM scheme and data encoded by the second PAM scheme, and passing this to respective first and second interleavers;
   a first de-interleaver for decoding data encoded according to the first PAM scheme;
   a second de-interleaver for decoding data encoded according to the second PAM scheme;
   a form-metrics block, receiving the output of the first and second de-interleavers and forming metric information for decoding.

9. A method of transmitting a multicarrier signal in a transmission scheme having a plurality of frequency domain carrier signals having in-phase and quadrature components subdivided in the time domain into symbols, each carrier having a different respective frequency; the method comprising:

   receiving a predetermined number of bits of data;
   determining what carrier signal modulation is required to represent those bits according to a first pulse amplitude modulation (PAM) scheme;
   determining what carrier signal modulation is required to represent those bits according to a second pulse amplitude modulation (PAM) scheme;
   encoding the data once according to the first PAM scheme and once according to the second PAM scheme as determined by the first and second mappers, onto separate in-phase and/or quadrature components of symbols in the plurality of carrier signals, such that the first and second encodings of data do not appear in the same carrier and symbol;
   generating a single time domain multicarrier signal from the plurality of frequency domain carrier signals using a frequency -to-time-domain converter.

10. The method of claim 9, wherein in the interleaving step, the first and second encodings of data are applied to different carrier signals to one another.

11. The method of claim 9, wherein the interleaving step comprises encoding data according to the first mapping onto a first set of carrier signals, and the encoding data according to the second mapping onto a second set of carrier signals, and wherein the first and second sets are mutually exclusive.

12. The method of claim 9, wherein in the interleaving step the first and second encodings of data are encoded in different symbols to one another.

13. The method of any of claims 9 to 12, wherein the second pulse amplitude modulation (PAM) scheme is a modified version of the first.

14. The method of claim 13, wherein the second pulse amplitude modulation scheme is a modified version of the first, such if the mappings of data for each PAM scheme were plotted in two-dimensions, the result is a grid resembling a rotated QAM constellation.

15. A method of decoding a multicarrier signal transmitted by the transmission method of any of claims 9 to 14, comprising:

   receiving the transmitted data;
   synchronising the transmitted data, and applying channel estimation to detect and output the symbols of the time domain signal;
   extracting from the symbols, data encoded by the first PAM scheme and data encoded by the second PAM scheme,
   de-interleaving the data encoded according to the first PAM scheme;
   de-interleaving the data encoded according to the second PAM scheme;
   forming metric information based on the de-interleaved data from both first and second PAM schemes.

**Patentansprüche**

1. Sender zum Senden eines Mehrträgersignals, wobei der Sender Folgendes umfasst:

   mehrere separate Trägersignalpfade für Frequenzdomänen-Trägersignale mit phasengleichen und Quadratur-Komponenten, die in der Zeitdomäne in Symbole unterteilt sind, wobei jeder Träger eine andere jeweilige Frequenz hat;
   einen Frequenz-in-Zeitdomäne-Wandler zum Umwandeln der mehreren Frequenzdomänen-Trägersignale in ein einzelnes Zeitdomänen-Mehrträgersignal;
   eine Mappereinheit zum Empfangen eines Stroms von Quelldaten repräsentierenden Datenbits und zum Codieren derselben auf die ein oder mehreren Träger; wobei die Mappereinheit Folgendes umfasst:

   einen ersten Mapper zum Nehmen einer vorbestimmten Anzahl von Bits von Daten und zum Ermitteln, welche Trägersignalmodulation nötig ist, um diese Bits gemäß einem ersten Pulsamplitudenmodulation-(PAM)-Schema darzustellen;
   einen zweiten Mapper zum Empfangen derselben Datenbits wie die ersten und zum Ermitteln, welche Trägersignalmodulation nötig ist, um diese Bits gemäß einem zweiten Pulsamplitudenmodulation-(PAM)-Schema darzustellen;
   einen Verschachtler zum Codieren der Daten einmal gemäß dem ersten PAM-Schema und einmal gemäß dem zweiten PAM-Schema gemäß Ermittlung durch den ersten und zweiten Mapper auf separate phasengleiche und/oder Quadratur-Komponenten von Symbolen in der Mehrzahl von Trägersignalen, so dass die erste und zweite Codierung von Daten nicht im selben Träger und Symbol erscheinen.

2. Sender nach Anspruch 1, wobei der Verschachtler so angeordnet ist, dass die erste und zweite Codierung von Daten auf voneinander unterschiedlichen Trägersignalen erscheinen.

3. Sender nach Anspruch 1, wobei der Verschachtler erste und zweite Verschachtler umfasst, die zum jeweiligen Codieren der Daten gemäß dem ersten PAM-Schema und gemäß dem zweiten PAM-Schema angeordnet sind, wobei der erste Verschachtler Daten gemäß dem ersten Mapping auf einen ersten Satz von Trägersignalen codiert und der zweite Verschachtler Daten gemäß dem zweiten Mapping auf einen zweiten Satz von Trägersignalen codiert und wobei der erste und der zweite Satz sich gegenseitig ausschließen.

4. Sender nach Anspruch 1, wobei der Verschachtler so angeordnet ist, dass die erste und zweite Codierung von Daten in voneinander unterschiedlichen Symbolen erscheinen.

5. Sender nach einem der vorherigen Ansprüche, wobei das zweite Pulsamplitudenmodulation-(PAM)-Schema eine modifizierte Version des ersten ist.

6. Sender nach Anspruch 5, wobei das zweite Pulsamplitudenmodulationsschema eine modifizierte Version des ersten ist, so dass das Ergebnis ein einer rotierten QAM-Konstallation ähnelndes Gitter ist, wenn die Mappings von Daten für jedes PAM-Schema in zwei Dimensionen geplottet wurden.

7. Sender nach Anspruch 6, wobei das Mapping so gewählt wird, dass die rotierte QAM-ähnliche Konstellation einem Gray-Mapping folgt.

8. Empfänger zum Decodieren eines vom Sender gesendeten Mehrträgersignals nach einem der vorherigen Ansprüche, der Folgendes umfasst:

ein Front-End zum Empfangen der gesendeten Daten;
Synchronisations- und Schätzschaltungen zum Erkennen und Ausgeben von Symbolen im Zeitdomänensignal;
einen Extraktor zum Extrahieren von durch das erste PAM-Schema codierten Daten und von durch das zweite PAM-Schema codierten Daten aus dem Symbol, und Leiten derselben zu einem jeweiligen ersten und zweiten Verschachtler;
einen ersten Entschachtler zum Decodieren von Daten, die gemäß dem ersten PAM-Schema codiert wurden;
einen zweiten Entschachtler zum Decodieren von Daten, die gemäß dem zweiten PAM-Schema codiert wurden;
einen Formmetrikblock zum Empfangen des Ausgangs des ersten und zweiten Entschachtlers und zum Bilden von metrischen Informationen zum Decodieren.

9. Verfahren zum Senden eines Mehrträgersignals in einem Sendeschema mit mehreren Frequenzdomänen-Trägersignalen mit phasengleichen und Quadratur-Komponenten, die in der Zeitdomäne in Symbole unterteilt sind, wobei jeder Träger eine andere jeweilige Frequenz hat; wobei das Verfahren Folgendes beinhaltet:

Empfangen einer vorbestimmten Anzahl von Datenbits;
Ermitteln, welche Trägersignalmodulation nötig ist, um diese Bits gemäß einem ersten Pulsamplitudenmodulation-(PAM)-Schema darzustellen;
Ermitteln, welche Trägersignalmodulation nötig ist, um diese Bits gemäß einem zweiten Pulsamplitudenmodulation-(PAM)-Schema darzustellen;
Codieren der Daten einmal gemäß dem ersten PAM-Schema und einmal gemäß dem zweiten PAM-Schema gemäß Ermittlung durch den ersten und zweiten Mapper auf separate phasengleiche und/oder Quadratur-Komponenten von Symbolen in der Mehrzahl von Trägersignalen, so dass die erste und zweite Codierung von Daten nicht in demselben Träger und Symbol erscheinen;
Erzeugen eines einzelnen Zeitdomänen-Mehrträgersignals aus der Mehrzahl von Frequenzdomänen-Trägersignalen mit einem Frequenz-in-Zeitdomäne-Wandler.

10. Verfahren nach Anspruch 9, wobei der Verschachtelungsschritt, die erste und die zweite Codierung von Daten auf voneinander unterschiedliche Trägersignale angewendet werden.

11. Verfahren nach Anspruch 9, wobei der Verschachtelungsschritt das Codieren von Daten gemäß dem ersten Mapping auf einen ersten Satz von Trägersignalen und das Codieren von Daten gemäß dem zweiten Mapping auf einen zweiten Satz von Trägersignalen beinhaltet, und wobei der erste und der zweite Satz sich gegenseitig ausschließen.

12. Verfahren nach Anspruch 9, wobei im Verschachtelungsschritt die erste und zweite Codierung von Daten in voneinander unterschiedlichen Symbolen codiert werden.

13. Verfahren nach einem der Ansprüche 9 bis 12, wobei das zweite Pulsamplitudenmodulation-(PAM)-Schema eine modifizierte Version des ersten ist.

14. Verfahren nach Anspruch 13, wobei das zweite Pulsamplitudenmodulationsschema eine modifizierte Version des ersten ist, so dass das Ergebnis ein einer rotierten QAM-Konstallation ähnelndes Gitter ist, wenn die Mappings von Daten für jedes PAM-Schema in zwei Dimensionen geplottet wurden.

15. Verfahren zum Decodieren eines mit dem Sendeverfahren nach einem der Ansprüche 9 bis 14 gesendeten Mehrträgersignals, das Folgendes beinhaltet:

Empfangen der gesendeten Daten;
Synchronisieren der gesendeten Daten und Anwenden einer Kanalschätzung zum Erkennen und Ausgeben der Symbole des Zeitdomänensignals;
Extrahieren von durch das erste PAM-Schema codierten Daten und durch das zweite PAM-Schema codierten Daten aus den Symbolen,
Entschachteln der gemäß dem ersten PAM-Schema codierten Daten;
Entschachteln der gemäß dem zweiten PAM-Schema codierten Daten;

Bilden von metrischen Informationen auf der Basis der entschachtelten Daten sowohl vom ersten als auch vom zweiten PAM-Schema.

**Revendications**

1. Emetteur de transmission d'un signal mutiporteuses, l'émetteur comprenant :

   une pluralité de chemins séparés de signaux de porteuses pour les signaux de porteuses du domaine fréquence ayant des composants en phase et en quadrature sous-divisés dans le domaine temps en des symboles, chaque porteuse ayant une fréquence respective différente;
   un convertisseur de domaine fréquence en temps pour convertir la pluralité de signaux de porteuses du domaine fréquence en un seul signal multiporteuses du domaine temps;
   une unité de mappeurs arrangés pour recevoir un train de bits de données représentant des données source et les coder sur la ou les plusieurs porteuses; où l'unité de mappeurs comprend :

   un premier mappeur arrangé pour prendre un nombre prédéterminé de bits de données et déterminer quelle est la modulation du signal de porteuse requise pour représenter ces bits conformément à un premier schéma de modulation d'impulsions en amplitude (MIA);
   un deuxième mappeur arrangé pour recevoir les mêmes bits de données que le premier et déterminer quelle est la modulation du signal de porteuse requise pour représenter ces bits conformément à un deuxième schéma de modulation d'impulsions en amplitude (MIA);
   un entrelaceur arrangé pour coder une fois les données conformément au premier schéma MIA et une fois conformément au deuxième schéma MIA, comme ceci est déterminé par les premier et deuxième mappeurs, sur des composants en phase et/ou en quadrature séparés de symboles dans la pluralité de signaux de porteuses, de sorte que les premier et deuxième codages de données n'apparaissent pas dans la même porteuse et dans le même symbole.

2. Emetteur selon la revendication 1, dans lequel l'entrelaceur est arrangé de sorte que les premier et deuxième codages de données apparaissent sur des signaux de porteuses différents l'un de l'autre.

3. Emetteur selon la revendication 1, dans lequel l'entrelaceur comprend un premier et un deuxième entrelaceurs arrangés pour coder respectivement les données conformément au premier schéma MIA et conformément au deuxième schéma MIA, où le premier entrelaceur code les données conformément au premier mappage sur un premier jeu de signaux de porteuses et le deuxième entrelaceur code les données conformément au deuxième mappage sur un deuxième jeu de signaux de porteuses et où les premier et deuxième jeux sont mutuellement exclusifs.

4. Emetteur selon la revendication 1, dans lequel l'entrelaceur est arrangé de sorte que les premier et deuxième codages de données apparaissent dans des symboles différents l'un de l'autre.

5. Emetteur selon l'une quelconque des revendications précédentes, dans lequel le deuxième schéma de modulation d'impulsions en amplitude (MIA) est une version modifiée du premier.

6. Emetteur selon la revendication 5, dans lequel le deuxième schéma de modulation d'impulsions en amplitude (MIA) est une version modifiée du premier, de sorte que, si les mappages de données pour chaque schéma MIA étaient tracés en deux dimensions, le résultat serait un quadrillage ressemblant à une constellation QAM tournée.

7. Emetteur selon la revendication 6, dans lequel le mappage est choisi de sorte que la constellation pareille à une QAM tournée suit le mappage Gray.

8. Récepteur de décodage d'un signal multiporteuses transmis par l'émetteur selon l'une quelconque des revendications précédentes, comprenant :

   un frontal de réception des données transmises;
   des circuits de synchronisation et d'estimation pour détecter et sortir des symboles dans le signal du domaine temps;
   un extracteur pour extraire les données de symboles codées par le premier schéma MIA et les données codées par le deuxième schéma MIA et les passer respectivement aux premier et deuxième entrelaceurs;
un premier désentrelaceur pour décoder les données codées conformément au premier schéma MIA;
un deuxième désentrelaceur pour décoder les données codées conformément au deuxième schéma MIA;
un bloc de formation métrique, recevant la sortie des premier et deuxième entrelaceurs et formant des informations métriques pour le décodage.

9. Procédé de transmission d'un signal multiporteuses dans un schéma de transmission ayant une pluralité de signaux de porteuses du domaine fréquence ayant des composants en phase et en quadrature sous-divisés dans le domaine temps en des symboles, chaque porteuse ayant une fréquence respective différente, le procédé comprenant :

recevoir un nombre prédéterminé de bits de données;
déterminer quelle est la modulation du signal de porteuse requise pour représenter ces bits conformément à un premier schéma de modulation d'impulsions en amplitude (MIA);
déterminer quelle est la modulation du signal de porteuse requise pour représenter ces bits conformément à un deuxième schéma de modulation d'impulsions en amplitude (MIA);
coder une fois les données conformément au premier schéma MIA et une fois conformément au deuxième schéma MIA, comme ceci est déterminé par les premier et deuxième mappeurs, sur des composants en phase et/ou en quadrature séparés de symboles dans la pluralité de signaux de porteuses, de sorte que les premier et deuxième codages de données n'apparaissent pas dans la même porteuse et dans le même symbole;
générer un seul signal multiporteuses du domaine temps à partir de la pluralité de signaux de porteuses du domaine fréquence en utilisant un convertisseur de domaine fréquence en temps.

10. Procédé selon la revendication 9, dans lequel, à l'étape d'entrelacement, les premier et deuxième codages de données sont appliqués à des signaux de porteuses différents l'un de l'autre.

11. Procédé selon la revendication 9, dans lequel l'étape d'entrelacement comprend coder les données conformément au premier mappage sur un premier jeu de signaux de porteuses et coder les données conformément au deuxième mappage sur un deuxième jeu de signaux de porteuses et où les premier et deuxième jeux sont mutuellement exclusifs.

12. Procédé selon la revendication 9, dans lequel, à l'étape d'entrelacement, les premier et deuxième codages de données sont codés dans des symboles différents l'un de l'autre.

13. Procédé selon l'une quelconque des revendications 9 à 12, dans lequel le deuxième schéma de modulation d'impulsions en amplitude (MIA) est une version modifiée du premier.

14. Procédé selon la revendication 13, dans lequel le deuxième schéma de modulation d'impulsions en amplitude est une version modifiée du premier, de sorte que si les mappages de données pour chaque schéma MIA étaient tracés en deux dimensions, le résultat serait un quadrillage ressemblant à une constellation QAM tournée.

15. Procédé de décodage d'un signal multiporteuses transmis par le procédé de transmission selon l'une quelconque des revendication 9 à 14, comprenant :

recevoir les données transmises;
synchroniser les données transmises et appliquer une estimation de canal pour détecter et sortir les symboles du signal du domaine temps;
extraire des symboles, les données codées par le premier schéma MIA et les données codées par le deuxième schéma MIA;
désentrelacer les données codées conformément au premier schéma MIA;
désentrelacer les données codées conformément au deuxième schéma MIA;
former des informations métriques basées sur les données désentrelacées des premier et deuxième schémas MIA.

Figure 1

EP 2 165 494 B1

Figure 2

Figure 3

16-PAM/16-QAM

Simple repetition

Re-mapped repetition

Figure 4

64-PAM/64-QAM

Simple repetition

Re-mapped repetition

Figure 5

256-PAM/256-QAM

Simple repetition

Re-mapped repetition

Figure 6

Double Re-mapped 16-PAM

| Relationship of u1 and u2 | | Bit mapping | | | |
|---|---|---|---|---|---|
| u1 | u2 | Bit 0 | Bit 1 | Bit 2 | Bit 3 |
| -15 | -9 | 1 | 1 | 1 | 1 |
| -13 | -1 | 1 | 0 | 1 | 1 |
| -11 | 7 | 1 | 0 | 0 | 1 |
| -9 | 15 | 1 | 1 | 0 | 1 |
| -7 | -11 | 0 | 1 | 1 | 1 |
| -5 | -3 | 0 | 0 | 1 | 1 |
| -3 | 5 | 0 | 0 | 0 | 1 |
| -1 | 13 | 0 | 1 | 0 | 1 |
| 1 | -13 | 0 | 1 | 1 | 0 |
| 3 | -5 | 0 | 0 | 1 | 0 |
| 5 | 3 | 0 | 0 | 0 | 0 |
| 7 | 11 | 0 | 1 | 0 | 0 |
| 9 | -15 | 1 | 1 | 1 | 0 |
| 11 | -7 | 1 | 0 | 1 | 0 |
| 13 | 1 | 1 | 0 | 0 | 0 |
| 15 | 9 | 1 | 1 | 0 | 0 |

# Figure 7

Figure 8

triangles are 1        diamonds are 0

Figure 9

Double Re-mapped 64-PAM

| Relationship of u1 and u2 | | Bit mapping | | | | | |
|---|---|---|---|---|---|---|---|
| u1 | u2 | Bit 0 | Bit 1 | Bit 2 | Bit 3 | Bit 4 | Bit 5 |
| -63 | -49 | 1 | 1 | 1 | 1 | 1 | 1 |
| -61 | -33 | 0 | 1 | 1 | 1 | 1 | 1 |
| -59 | -17 | 0 | 1 | 0 | 1 | 1 | 1 |
| -57 | -1 | 1 | 1 | 0 | 1 | 1 | 1 |
| -55 | 15 | 1 | 1 | 0 | 1 | 0 | 1 |
| -53 | 31 | 0 | 1 | 0 | 1 | 0 | 1 |
| -51 | 47 | 0 | 1 | 1 | 1 | 0 | 1 |
| -49 | 63 | 1 | 1 | 1 | 1 | 0 | 1 |
| -47 | -51 | 1 | 0 | 1 | 1 | 1 | 1 |
| -45 | -35 | 0 | 0 | 1 | 1 | 1 | 1 |
| -43 | -19 | 0 | 0 | 0 | 1 | 1 | 1 |
| -41 | -3 | 1 | 0 | 0 | 1 | 1 | 1 |
| -39 | 13 | 1 | 0 | 0 | 1 | 0 | 1 |
| -37 | 29 | 0 | 0 | 0 | 1 | 0 | 1 |
| -35 | 45 | 0 | 0 | 1 | 1 | 0 | 1 |
| -33 | 61 | 1 | 0 | 1 | 1 | 0 | 1 |
| -31 | -53 | 1 | 0 | 1 | 0 | 1 | 1 |
| -29 | -37 | 0 | 0 | 1 | 0 | 1 | 1 |
| -27 | -21 | 0 | 0 | 0 | 0 | 1 | 1 |
| -25 | -5 | 1 | 0 | 0 | 0 | 1 | 1 |
| -23 | 11 | 1 | 0 | 0 | 0 | 0 | 1 |
| -21 | 27 | 0 | 0 | 0 | 0 | 0 | 1 |
| -19 | 43 | 0 | 0 | 1 | 0 | 0 | 1 |
| -17 | 59 | 1 | 0 | 1 | 0 | 0 | 1 |
| -15 | -55 | 1 | 1 | 1 | 0 | 1 | 1 |
| -13 | -39 | 0 | 1 | 1 | 0 | 1 | 1 |
| -11 | -23 | 0 | 1 | 0 | 0 | 1 | 1 |
| -9 | -7 | 1 | 1 | 0 | 0 | 1 | 1 |
| -7 | 9 | 1 | 1 | 0 | 0 | 0 | 1 |
| -5 | 25 | 0 | 1 | 0 | 0 | 0 | 1 |
| -3 | 41 | 0 | 1 | 1 | 0 | 0 | 1 |
| -1 | 57 | 1 | 1 | 1 | 0 | 0 | 1 |

# Figure 10
# (part 1/2)

| Relationship of u1 and u2 | | Bit mapping | | | | | |
|---|---|---|---|---|---|---|---|
| U1 | u2 | Bit 0 | Bit 1 | Bit 2 | Bit 3 | Bit 4 | Bit 5 |
| 1 | -57 | 1 | 1 | 1 | 0 | 1 | 0 |
| 3 | -41 | 0 | 1 | 1 | 0 | 1 | 0 |
| 5 | -25 | 0 | 1 | 0 | 0 | 1 | 0 |
| 7 | -9 | 1 | 1 | 0 | 0 | 1 | 0 |
| 9 | 7 | 1 | 1 | 0 | 0 | 0 | 0 |
| 11 | 23 | 0 | 1 | 0 | 0 | 0 | 0 |
| 13 | 39 | 0 | 1 | 1 | 0 | 0 | 0 |
| 15 | 55 | 1 | 1 | 1 | 0 | 0 | 0 |
| 17 | -59 | 1 | 0 | 1 | 0 | 1 | 0 |
| 19 | -43 | 0 | 0 | 1 | 0 | 1 | 0 |
| 21 | -27 | 0 | 0 | 0 | 0 | 1 | 0 |
| 23 | -11 | 1 | 0 | 0 | 0 | 1 | 0 |
| 25 | 5 | 1 | 0 | 0 | 0 | 0 | 0 |
| 27 | 21 | 0 | 0 | 0 | 0 | 0 | 0 |
| 29 | 37 | 0 | 0 | 1 | 0 | 0 | 0 |
| 31 | 53 | 1 | 0 | 1 | 0 | 0 | 0 |
| 33 | -61 | 1 | 0 | 1 | 1 | 1 | 0 |
| 35 | -45 | 0 | 0 | 1 | 1 | 1 | 0 |
| 37 | -29 | 0 | 0 | 0 | 1 | 1 | 0 |
| 39 | -13 | 1 | 0 | 0 | 1 | 1 | 0 |
| 41 | 3 | 1 | 0 | 0 | 1 | 0 | 0 |
| 43 | 19 | 0 | 0 | 0 | 1 | 0 | 0 |
| 45 | 35 | 0 | 0 | 1 | 1 | 0 | 0 |
| 47 | 51 | 1 | 0 | 1 | 1 | 0 | 0 |
| 49 | -63 | 1 | 1 | 1 | 1 | 1 | 0 |
| 51 | -47 | 0 | 1 | 1 | 1 | 1 | 0 |
| 53 | -31 | 0 | 1 | 0 | 1 | 1 | 0 |
| 55 | -15 | 1 | 1 | 0 | 1 | 1 | 0 |
| 57 | 1 | 1 | 1 | 0 | 1 | 0 | 0 |
| 59 | 17 | 0 | 1 | 0 | 1 | 0 | 0 |
| 61 | 33 | 0 | 1 | 1 | 1 | 0 | 0 |
| 63 | 49 | 1 | 1 | 1 | 1 | 0 | 0 |

# Figure 10
# (part 2/2)

triangles are 1          diamonds are 0

Bit 0

Bit 1

Bit 2

Bit 3

Bit 4

Bit 5

Figure 11

triangles are 1          diamonds are 0

Figure 12

Figure 13

EP 2 165 494 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7173979 B